# EUROPEAN PATENT APPLICATION

(11) **EP 4 339 172 A1**
(43) Date of publication of application: **20.03.2024**
(21) Application number: 22195383.9
(22) Date of filing: 13.09.2022
(51) Int. Cl.: C04B 7/48

(54) **METHOD FOR PRODUCING MINERAL BINDER ADDITIVES**

(71) Applicant: Sika Technology AG, 6340 Baar (CH)
(72) Inventor: EBERHARDT, Arnd, 8400 Winterthur (CH); GALLUCCI, Emmanuel, 8048 Zürich (CH); JUILLAND, Patrick, 3005 Bern (CH); FRUNZ, Lukas, 8305 Dietlikon (CH); MUTHS-KERN, Denise, 8047 Zürich (CH); PEGADO, Luis, 5200 Brugg (CH); RIOU, Arnaud, 10437 Berlin (DE)
(74) Representative: Sika Patent Attorneys

(57) **Abstract**

A method to produce a mineral binder additive comprises the steps of:
a) Providing a source material comprising uncured mineral binder material, carbonating the source material with carbon dioxide, especially under abrasive conditions, such that the mineral binder material is at least partially, in particular completely, carbonated to produce a carbonated granular product, especially a carbonated powder;
b) Retrieving the carbonated granular product of step a) as the mineral binder additive.

## Description

### Technical field

The invention is concerned with a method to produce a mineral binder additive from uncured mineral binder material. Furthermore, the invention is directed to a mineral binder additive obtainable or obtained with this method and a method for producing a mineral binder composition with such an additive. Additionally, the invention is concerned with the use of a mineral binder additive as an additive in a mineral binder composition.

### Background art

In construction industry, a large amount of mineral binder based materials, such as e.g. mortar or concrete, is used. However, the production of cement and other mineral binders generates a considerable amount of carbon dioxide (CO₂), which is of relevance to the climate. In order to reduce carbon dioxide emissions, cement in binder compositions can be partly replaced by latent hydraulic and/or pozzolanic cement admixtures, as for example fly ashes, slags, or silica dust. Admixtures of this kind are byproducts of various industrial processes and are therefore advantageous in relation to the carbon dioxide balance. However, setting of cement admixtures of this kind, without additional measures, takes much longer than in the case of hydraulic cement.

Another approach is described in WO 2017/041176 A1 (Carboncure Technologies Inc.). Specifically, a wet cement mix is carbonated prior to addition of aggregates, admixtures, SCM and/or other components to produce a carbonated concrete. Thereby, carbon dioxide is incorporated in the concrete produced and removed from the environment.

However, another problem with cement production is the fact that in a significant number of cement plants or grinding stations, batches of out of specification cements ("off-spec cements") are piled up and stocked. This is for example cement that, e.g. due to temporary processing issues, does not fulfil certain desired specifications as defined in standards. It is known that additions of up to 1 wt.-% of off-spec cement in cement production may not compromise properties of fresh cements to be produced. However, this rather low proportion leads sometimes to the situation that the stock of off-spec material cannot be consumed in due time or at some point cannot be used anymore because of exposure to the environment resulting in ageing induced decay of such material. In this case, the off-spec cement is essentially lost and has to be disposed, e.g. in landfills. This is a particularly unsatisfactory situation, especially with regard to the carbon dioxide balance.

Thus, there is still a need to develop improved solutions, which further reduce carbon dioxide emissions in the construction industry.

### Disclosure of the invention

It is an object of the present invention to provide improved solutions, which further reduce carbon dioxide emissions in the construction industry. Especially the solution should allow for recycling and/or reuse out of specification mineral binders, in particular out of specification cements.

Surprisingly, it has been found that these objects can be achieved with the method according to claim 1. Specifically, the invention provides a method to produce a mineral binder additive comprising the steps of:
a) Providing a source material comprising uncured mineral binder material, carbonating the source material with carbon dioxide, especially under abrasive conditions, such that the mineral binder material is at least partially, in particular essentially completely, carbonated to produce a carbonated product;
b) Retrieving the carbonated product of step a) as the mineral binder additive in dry state.

Mineral binders, such as e.g. cement and/or clinker, can fully carbonate once hydrated. However, these materials can also undergo direct carbonation in the presence of carbon dioxide, especially under humid conditions. As cement plants are huge emitters of carbon dioxide that is produced during calcination of limestone necessary to produce cement clinker, the carbon dioxide can be reused in the inventive process for carbonation of the uncured mineral binder material, e.g. out of specification cement, comprised in the source material. Thereby, carbon dioxide is sequestered.

Moreover, it was found that the carbonated product, which is retrieved in step b) of the inventive process, can be reused as mineral binder additive. Specifically, the mineral binder additive can, for example, be used as cement substitute in mineral binder compositions, as accelerating additive, and/or as rheological improver for mineral binder compositions.

Especially, the mineral binder additives obtainable with the inventive process can be added to mineral binder compositions during and/or after mineral binder production, or it can be used as an admixture to be added to mineral binder compositions later on, after production of the mineral binder.

Thus, the inventive process allows to significantly reduce carbon dioxide emissions in cement production and at the same time enables the reuse of waste mineral binder materials. Therefore, the inventive process has a significant resource saving potential and represents an important step towards circular economy.

In the present context, the term "source material" stands for any material comprising or consisting of uncured mineral binder material. Preferably, the source material is a granular material, especially a powder.

If the source material is not a granular material, it may be crushed prior to step a). This is especially advantageous if the source material comprises hardened mineral binder. Crushing will increase the surface of the source material, which in turn enhances the carbonation process.

In particular, the source material may comprise a certain proportion of hardened mineral binder material in addition to the uncured mineral binder. This is for example the case if waste or off-spec cement is stored and thereby partially hydrated.

However, in a highly preferred embodiment, a proportion of hardened mineral binder in the source material is below 50 wt.-%, in particular below 5 wt.-%, especially below 1 wt.-%, with respect to the total weight of the source material. Particularly, the source material does not comprise any hardened mineral binder.

Especially, a proportion of uncured mineral binder in the source material is at least 50 wt.-%, especially at least 90 wt.%, in particular at least 95 wt.% or 99 wt.%, with respect to the total weight of the source material. Particularly, the source material fully consists of uncured mineral binder.

"Uncured mineral binder" is meant to be mineral binder that has not yet hardened in a chemical hydration reaction. Thus, in this case, the mineral binder does not comprise hydrates. In particular, the uncured mineral binder comprises or consist of hydraulic, non-hydraulic, latent hydraulic and/or pozzolanic binder material being present in uncured state.

A "hydraulic binder" is meant to be a mineral binder that can be hardened with water or even under water, such as especially cement or hydraulic lime. A "non-hydraulic binder" is a mineral binder that can be hardened with water even but not underwater, such as, in particular, gypsum in the form of anhydrite or gypsum hemihydrate.

The term "latent hydraulic and/or pozzolanic binder materials" stands in particular for type II concrete additives with latent hydraulic and/or pozzolanic character according to standard EN 206-1. In particular, the latent hydraulic or pozzolanic binder material comprises or consists of slag, fly ash, silica fume, clays and/or pozzolanes.

Especially, the source material or the uncured mineral binder comprises or consists of cement clinker. Cement clinker is a solid material produced in the manufacture of cement as an intermediary product. Cement clinker occurs in particular as lumps and/or nodules. Typically, clinker particles have a size of a few millimetres up to 25 millimetres in diameter. However, other sizes are possible as well. Cement clinker is produced by sintering limestone and aluminosilicate materials, especially in a cement kiln. The cement clinker for example is a Portland cement clinker.

However, in another embodiment, the uncured mineral binder comprises or consists of cements of type CEM I, II, III, IV or V according to standard EN 197, in particular of type CEM I or II. However, other types of cements can be used as well.

When compared to cement clinker, cement is a much finer product. Usually, cement is obtained by grinding cement clinker, optionally with further binder components, in a cement mill. Typically, cements have a Blaine surface of at least 1'000 cm²/g, for example from 3'000 - 5'000 cm²/g. Nevertheless, cements with other Blaine surfaces are known as well.

In particular, the uncured mineral binder comprises or consists of uncured hydraulic binder, e.g. uncured cementitious binder. However, the uncured mineral binder can comprise or consist of uncured hydraulic binder, uncured latent hydraulic binder and/or uncured pozzolanic binder materials as well.

In particular, the uncured hydraulic binder is uncured cement. Preferably, the uncured latent hydraulic and/or pozzolanic binder material is uncured slag and/or fly ash. A highly preferred uncured latent hydraulic binder material is uncured slag. In particular, the uncured mineral binder comprises or consists of 5 - 100 wt.-%, especially 50 - 100 wt.-%, more preferably, 65 - 100 wt.-%, of uncured hydraulic binder.

Especially, the uncured mineral binder comprises or consists of 5 - 95 wt.-% of uncured hydraulic binder and 95 - 5 wt.-% of uncured latent hydraulic and/or pozzolanic binder material. More preferably, the uncured mineral binder can comprise or consist of 30 - 90 wt.-% of uncured hydraulic binder and 70 - 10 wt.-% of uncured latent hydraulic and/or pozzolanic binder material.

Especially, the uncured mineral binder comprises or consists of production waste of cement production. This is for example cement clinker and/or cement that, e.g. due to temporary processing issues, does not fulfil certain desired specifications.

The expression "hardened mineral binder" in particular refers to a mineral binder that has hardened in a chemical hydration reaction which produced hydrates. Especially, the hardened mineral binder has hardened for at least 2 days, preferably at least 7 days, especially, at least 28 or at least 60 days.

In particular, the hardened mineral binder, if present, comprises or consists of hardened hydraulic binder, e.g. hardened cementitious binder. However, the hardened mineral binder can comprise or consist of hardened latent hydraulic and/or pozzolanic binder materials as well.

In highly preferred embodiment, the source material has a particle size of 0.5 - 100 mm, especially 1 - 50 mm, in particular 2 - 30 mm. This is in particular true if the source material comprises or consists of cement clinker. Thereby, preferably, the particle size is determined by sieve analysis, in particular with sieves featuring square openings. Especially, the particle size is expressed by the opening size of the test sieves, especially the length of a square opening, just passed by the particles concerned. Such rather large particle sizes are especially suitable for generating abrasive conditions during carbonation.

In another preferred embodiment, the source material, especially the uncured mineral binder, has a Blaine surface of 0.5 - 8'000 cm²/g, especially 1 - 5'000 cm²/g, in particular 3'000 - 5'000 cm²/g. The Blaine surface or fineness, respectively, is measured according to DIN EN 196-6:2018. However, source materials with a different fineness can be used as well. This is in particular true if the source material comprises or consists of uncured cement.

The mineral binder additive obtained in step b) is in the form of a granular product, especially in the form of a powder. In particular, the mineral binder additive is a dry solid granular material. Put differently, the mineral binder additive is not present in the form of a suspension. Especially a content of water in the mineral binder additive is below 5 wt.%, especially below 1 wt.-%, in particular below 0.1 wt.-%, with respect to the weight of the mineral binder additive. Especially, the mineral binder additive does not comprise any water.

A content of water in the mineral binder additive can be adjusted by drying. Thus, according to a further preferred embodiment, the mineral binder additive is dried before and/or after retrieving it. This is especially useful, if the treatment has been performed under humid conditions or wet conditions, such as e.g. in a liquid.

Especially, drying is performed in in an oven, in particular at a temperature of 30 - 150°C, preferably at 80 - 130°C or 100 - 120°C. As well, drying with the help of a stream of air, especially a stream of hot air, for example with a temperature of 30 - 150°C is a further option. This results in a fast drying of the mineral binder additive.

However, it is for example possible to dry the mineral binder additive under ambient conditions without further measures. This does not require any additional energy.

In particular, the mineral binder additive obtained in step b) comprises or consists of calcium carbonate. Especially it comprises or consists of calcium carbonate, silica, and aluminium hydroxide.

Especially preferred, a Blaine surface of the mineral binder additive is 0.5 - 8'000 cm²/g, in particular 1 - 5'000 cm²/g, especially 1 - 1'000 cm²/g, particularly 1 - 150 cm²/g, for example 20 - 100 cm²/g, whereby the Blaine surface is measured according to standard DIN EN 196-6:2018.

A fineness of the mineral binder additive can for example be controlled by the fineness of the source material and/or the carbonation process in step a) as explained further below.

The progress of carbonation in step a) can be measured, for example, by measuring the CO₂ partial pressure during step a). If the CO₂ partial pressure drops, carbonation takes place. If the CO₂ partial pressure does not decrease further during the carbonation process, it can be assumed that carbonation is essentially complete. Alternatively, the progress of carbonation can also be determined, for example, by measuring the pH value of the mixture during the carbonation in step a), especially if the step a) is performed in liquid. If the pH value decreases, carbonation is taking place. If the pH does not decrease further during the carbonation process, carbonation can be assumed to be essentially complete. This is usually the case at a pH value of 7 - 10, preferably 7 - 9.

In particular, in step a), carbonating of the source material with carbon dioxide takes place under abrasive conditions. This allows inter alia for improving the carbonation process and/or increasing the fineness of the carbonated product when compared to the fineness of the source material.

Especially, abrasive conditions lead to friction between granules of the source material and/or already carbonated material. In return, this will increase the carbonation rate. Overall, abrasive conditions improve the throughput or efficiency of the whole process. Thereby, step a) consists of the combination of (i) a chemical process, i.e. carbonation, and (ii) the action of mechanical forces. These two processes interact synergistically and accelerate the overall process significantly.

In particular, these two processes run simultaneously and iteratively until a desired degree of carbonation and/or fineness of the carbonated product or the mineral binder additive, respectively, is achieved.

Abrasive conditions can for example be generated by mechanical abrasion and/or attrition of the source material during carbonation, especially by stirring and/or milling of the source material during carbonation. This can be achieved with a stirring device, a mechanical mixer, a rotating and/or vibrating drum, a crusher, an extruder, an ultrasound treatment, or combinations thereof.

Especially, milling of the material can be performed in a cement mill, e.g. a ball mill.

Especially, a mixer is used producing an average shear rate over the course of mixing of at least 50 s⁻¹, in particular at least 100 s⁻¹, especially at least 500 s⁻¹, particularly at least 1000 s⁻¹ or at least 4000 s⁻¹.

Preferably, carbonation of the source material in step a) takes place under a gas atmosphere containing or consisting of carbon dioxide. Thereby, preferably, the source material is in direct contact with the gas atmosphere. In this case, in particular, the source material during step a) in not immersed in a liquid, especially water, and/or does not form a suspension with a liquid, especially water.

The concentration of carbon dioxide in the gas atmosphere is in particular above the carbon dioxide concentration of normal air. A content of carbon dioxide in the gas atmosphere preferably is > 500 ppm carbon dioxide, in particular > 1'000 ppm, especially > 1'500 ppm.

Especially, mixtures of carbon dioxide with other gaseous substances, such as water vapour, nitrogen, oxygen, e.g. air, can be used as gas atmosphere for carbonation in step a). Such mixtures in particular comprise carbon dioxide in an amount > 1 wt.-%, for example > 8 wt.-%, preferably > 10 wt.-%, especially preferred > 50 wt.-%, in particular > 95 wt.-%, especially > 99 wt.-%.

According to another preferred embodiment, exhaust gas from industrial processes, especially flue gas, is used as the gas atmosphere for carbonation in step a). In particular, exhaust gas from a cement plant is used as the gas atmosphere for carbonation in step a). Thereby, in particular, the carbon dioxide comprised in the exhaust gas is captured and used for carbonation in step a) before it enters the atmosphere.

In these embodiments, the exhaust gas comprises CO₂. Advantageously the exhaust gas comprises about 5 - 25 wt.-% CO₂, preferably 8 - 20 wt.-% CO₂ or 10 - 15 wt.-% CO₂.

In a further preferred embodiment, the gas atmosphere in step a) consists of essentially pure carbon dioxide. A purity of the carbon dioxide preferably is > 50 wt.-%, for example > 75 wt.-%, preferably > 90 wt.-%, in particular > 95 wt.-%, especially > 99 wt.-%. With regard to the efficiency of the treatment, essentially pure carbon dioxide is highly favourable.

If the carbonation of the source material in step a) takes place under a gas atmosphere, the carbonation in step a) can take place under dry conditions or under humid conditions, especially with a relative humidity of 40 - 100%. Dry conditions are beneficial because the mineral binder additive can directly be obtained in dry state without further measures. However, the humidity in the gas atmosphere still is acceptable since the drying effort is rather low and the humidity might even improve the carbonation efficiency.

Without being bound by theory, it is believed that uncured mineral binder, and in particular cement clinker, is continuously hydrated under humid conditions to a minor extent. This seems to increase the carbonation rate significantly while the carbon dioxide absorption capacity still remains is at rather high level. Thereby, a relative humidity of 40 - 100% turned out to be highly advantageous. A different situation is given when carbonating cured or hydrated mineral binder material. In this case, the carbonation starts from already hydrated material with a much lower carbon dioxide absorption capacity. In this situation, humidity or water, respectively, do not affect the carbonation rate in similar manner.

A pressure of the gas atmosphere used for carbonation of the source material in step a) might be in the range of atmospheric pressure to an overpressure of for example 10 bar. For example, an overpressure of 0.1 - 2 bar is applied.

The source material may be provided in dry from or wetted with a liquid, especially water. A source material in dry from is beneficial because the carbonated granular product will have a low water content, which in turn makes it easier to obtain the mineral binder additive in dry state. However, the presence of some water on the source material still is acceptable since the drying effort is rather low and the liquid, especially water, even can improve the carbonation efficiency.

However, according to another embodiment, the carbonation of the source material takes place in a liquid, and, preferably, the carbon dioxide is added in gaseous form into the liquid. In this case, the source material is at least partially, in particular fully, immersed in the liquid. Thereby, the liquid is in particular an aqueous liquid, preferably water. This causes the carbon dioxide to dissolve in the aqueous liquid or water. In this case, drying of the carbonated product is required if a dry mineral binder additive is desired.

If the carbonation of the source material takes place in an aqueous liquid, especially water, a weight ratio of water in the liquid to source material in particular is from 0.1 - 0.3, especially 0.1 - 0.25, for example 0.12 - 0.2. Further preferred, in this case carbonation takes place under abrasive conditions as described above.

In this embodiment, carbonation and hydration reactions take place simultaneously. Similar to humid conditions described above, this seems to increase the carbonation rate significantly while the carbon dioxide absorption capacity remains at rather high level. Due to the low level of water in this embodiment, it is still possible to obtain a granular product. This is in particular true if the treatment takes place under abrasive conditions. Therefore, in particular, unlike the process described in WO 2017/041176 A1, no processable and hardenable mineral binder composition, e.g. a grout, mortar or concrete composition, is produced. Especially, step a) takes place at a temperature between -10 - 100°C, especially between -5 - 75°C or 5 - 40°C. However, for example under humid conditions, the treatment may take place above 100°C.

Preferably, a density of solid material, in particular source material and/or carbonated product, in a processing volume during step a) is about 10 - 80 vol.-%, especially 15 - 75 vol.-%, in particular 20 - 70 vol.-%, more preferably 30 - 65 vol.-% or 40 - 60 vol.-%. The term "processing volume" stands for the volume where the carbonation is effectively carried out. In other words, the processing volume is defined to be the space in which the source material is exposed to carbonation and optionally abrasive conditions.

The carbonating of the source material in step a) can be done in a batch process or in a continuous process.

A further aspect of the present invention is directed to a mineral binder additive obtainable or obtained by the method as described above.

In particular, the mineral binder additive comprises or consists of calcium carbonate. Especially it comprises or consists of calcium carbonate, silica, and aluminium hydroxide.

Especially, the mineral binder additive comprises or consists of carbonated cement, for example carbonate cement of type CEM I, II, III, IV or V according to standard EN 197.

Especially preferred, a Blaine surface of the mineral binder additive is 0.5 - 8'000 cm²/g, in particular 1 - 5'000 cm²/g, especially 1 - 1'000 cm²/g, particularly 1 - 150 cm²/g, for example 20 - 100 cm²/g.

The mineral binder additive in particular is in the form of a granular product, especially in the form of a powder. In particular, the mineral binder additive is a dry solid granular material. Put differently, the mineral binder additive is not present in the form of a suspension. Especially, a content of water in the mineral binder additive is below 5 wt.%, especially below 1 wt.-%, in particular below 0.1 wt.-%, with respect to the weight of the mineral binder additive. Especially, the mineral binder additive does not comprise any water.

A still further aspect of the present invention is related to a method to produce a mineral binder composition, especially a mortar and/or concrete composition, comprising the steps of:
- producing a mineral binder additive as described above or providing a mineral binder additive as described above and
- adding a further uncured mineral binder material, especially cement, limestone and/or clays;
- optionally adding aggregates;
- optionally adding at least one admixture;
- optionally adding water.

A proportion of the mineral binder additive preferably is from 0.001 - 40 wt.%, especially 1 - 25 wt.%, with respect to the total amount of the mineral binder additive and further uncured mineral binder together.

The proportion of the mineral binder additive depends on the intended use. For example, if the mineral binder additive is used as an accelerator and/or rheology improver, the proportion might by in the range of 0.001 - 10 wt.-%. If, however, the mineral binder additive is used as a cement substitute, a proportion might be chosen in the range of 5 - 40 wt.-%, especially 10 - 25 wt.-%.

The further uncured mineral binder material may be selected form mineral binder materials as described above and/or clays.

Clay minerals within the present context can be any type of clay containing materials, especially crude clays, low-temperature calcined clays, or high-temperature calcined clays. According to embodiments, the clay mineral is selected from crude clay, low-temperature calcined clay, and/or high-temperature calcined clay.

Crude clays are clay minerals extracted from e.g. a quarry, optionally purified and optionally dried. Low-temperature calcined clays are clays that have been thermally treated at temperatures between 500 - 1200°C. For example, low-temperature calcined clay minerals may be produced in a rotary kiln or in a flash calciner. High-temperature calcined clays are clay minerals that have been thermally treated at temperatures above 1200°C and typically between 1300 - 1400°C. High-temperature calcined clays typically are crystalline or contain high amounts of crystalline phases, especially of mullite.

According to embodiments, clay minerals of the present invention are crude clays, especially phyllosilicates. Especially the clay mineral comprises or consists of kaolinite, montmorillonite, and/or illite, in particular kaolinite. These are clays that can be calcined and have proven to be suitable as components of mineral binders. However, other clay minerals might be suitable as well.

Clay minerals of the present invention may be pure clays or may contain other materials as impurities. According to some embodiments, the content of clay in clay minerals, especially in crude clay, is at least 30 w%, preferably at least 50 w%, more preferably at least 70 w%, especially at least 85 w%, relative to the dry weight of the crude clay.

According to further embodiments, clay minerals within the present context are low-temperature calcined clays, especially low-temperature calcined kaolinite. A suitable flash calcination process is for example described in WO 2014/085538. According to especially preferred embodiments of the present invention, the calcined clay is metakaolin. However, other clay mineral might be suitable as well.

A clay mineral may be added in the form of excavation material from quarries and/or mining or it can be added in pure form.

Preferably, a weight ratio of clay mineral to carbonated product is from 5:1 - 1:1, especially 2.5:1 - 1.5:1, in particular 2:1. Thereby, the weight of the clay mineral is with respect to the pure mineral without any impurities possibly present. This allows for example for producing cements of type "LC³" comprising metakaolin, lime, cement and gypsum.

Aggregates are for example selected from gravel, sand and/or rock aggregates. Corresponding compositions can be formulated for example as mortar or concrete compositions.

If present, a proportion of aggregates is for example 50 - 85 wt.-%, especially 60 - 75 wt.%, with respect to the overall dry weight of the mineral binder composition. In this case, a proportion the mineral binder additive and the further mineral binder together is for example 15 - 50 wt.%, especially 20 - 35 wt.-%, with respect to the overall dry weight of the mineral binder composition.

Furthermore, the mineral binder composition may comprise at least one admixture, for example, a concrete admixture and/or a mortar admixture. The at least one admixture comprises, for example, a defoaming agent, a dye, a preservative, a plasticizer, a retarding agent, an air pore forming agent, a shrinkage reducing agent and/or a corrosion inhibitor or combinations thereof. Usually, if present, such admixtures are used with proportions of 0.0001 - 10 wt.%, with respect to the total dry weight of the mineral binder composition.

Especially, if the mineral binder composition contains water, a weight ratio of water to mineral binder can be in the range of 0.25-0.8, for example, 0.3-0.6, for example, 0.35-0.5. Such binder compositions can be processed directly as workable mortar or concrete compositions.

When omitting the addition of water in the above-mentioned method it is for example possible to produce dry mortar or concrete compositions.

A further aspect of the present invention is directed to the use of the mineral binder additive as described above as an additive for a mineral binder composition, in particular for accelerating the setting and/or hardening of the mineral binder composition, as a rheology improver in the mineral binder composition and/or as a cement substitute in the mineral binder composition.

Further advantageous implementations of the invention are evident from the exemplary embodiments.

### Exemplary embodiments

As an example, uncured off-spec Portland cement clinker was treated in a mixing device (concrete mixer) under continuous mixing resulting in abrasive conditions under a gas atmosphere comprising 5'000 ppm CO₂ and at a relative humidity of 60 wt.-% under atmospheric pressure at a temperature of 20°C.

The progress of the carbonation treatment was controlled by measuring the CO₂ partial pressure. During the treatment, the CO₂ partial pressure dropped due to the carbonation reaction. As soon as the CO₂ partial pressure did not decrease further, the process treatment was stopped and the carbonated powdery product was retrieved.

X-ray analysis revealed that the carbonated product mainly consisted of calcium carbonate, silica, and aluminium hydroxide. A Blaine surface was about 100 cm²/g.

The so-obtained product was used as a mineral binder additive as follows:
- As an accelerating additive in cementitious mortar compositions with proportions in the range of 1 wt.-%, with respect to the total amount of the mineral binder additive and the uncured cement in the mortar compositions.

Thereby, the hardening of the mortar composition could be accelerated when compared to a similar composition without the additive, as evidenced by a significantly increased 1d compressive strength.
- As partial cement replacement in concrete compositions with proportions in the range of 20 wt.-%, with respect to the total amount of the mineral binder additive and the uncured cement in the concrete compositions.

The so produced concrete compositions achieved a similar compressive strength after 28 days when compared with a similar composition without the additive. Thus, the mineral binder additive can be used to reduce the cement clinker content in mineral binder compositions.

It will be appreciated by those skilled in the art that the present invention can be implemented in other specific forms without departing from the spirit or essential characteristics thereof. The presently disclosed embodiments are therefore considered in all respects to be illustrative and not restrictive.

## Claims

1. Method to produce a mineral binder additive comprising the steps of:
a) Providing a source material comprising uncured mineral binder material, carbonating the source material with carbon dioxide, especially under abrasive conditions, such that the mineral binder material is at least partially, in particular completely, carbonated to produce a carbonated granular product, especially a carbonated powder;
b) Retrieving the carbonated granular product of step a) as the mineral binder additive.

2. Method according to claim 1, whereby the uncured mineral binder material is cement clinker.

3. Method according to any of claims 1 - 2, whereby the source material is free of hardened mineral binder material, in particular free of hydrated mineral binder material, especially free of hydrated cement.

4. Method according to any of claims 1 - 3, whereby step a) is effected such that a fineness of the carbonated product is increased when compared with the fineness of the source material.

5. Method according to any of claims 1 - 4, whereby the source material, especially the uncured mineral binder, has a particle size of 0.5 - 100 mm, especially 1 - 50 mm, in particular 2 - 30 mm.

6. Method according to any of claims 1 - 5, whereby a Blaine fineness of the produced mineral binder additive is 0.5 - 8'000 cm²/g, in particular 1 - 5'000 cm²/g, especially 1 - 1'000 cm²/g, particularly 1 - 150 cm²/g, for example 20 - 100 cm²/g.

7. Method according to any of claims 1 - 6, whereby abrasive conditions are generated by stirring and/or milling of the source material during carbonation.

8. Method according to any of claims 1 - 7, whereby the mineral binder additive obtained in step b) comprises calcium carbonate, especially the mineral binder additive comprises calcium carbonate, silica, and aluminium hydroxide.

9. Method according to any of claims 1 - 8, whereby carbonation in step a) takes place under humid conditions, especially with a relative humidity of 40 - 100%.

10. Method according to any of claims 1 - 9, whereby carbonation in step a) takes place under a gas atmosphere containing or consisting of carbon dioxide, whereby the source material is in direct contact with the gas atmosphere.

11. Method according to any of claims 1 - 10, whereby carbonation in step a) takes place under an atmosphere containing air with a carbon dioxide content of > 500 ppm carbon dioxide, in particular > 1'000 ppm.

12. Mineral binder additive obtainable or obtained by the method according to any of claims 1 - 11.

13. Method to produce a mineral binder composition comprising the steps of:
- producing a mineral binder additive according to the method of any of claims 1 - 11 or providing a mineral binder additive according to claim 12 and
- adding a further uncured mineral binder material and/or clays;
- optionally adding aggregates;
- optionally adding at least one admixture.

14. Method according to claim 12, whereby a proportion of the mineral binder additive is from 0.001 - 40 wt.%, especially 1 - 25 wt.%, with respect to the total amount of the mineral binder additive and further uncured mineral binder together.

15. Use of the mineral binder additive according to claim 12 as an additive for a mineral binder composition, in particular for accelerating the setting and/or hardening of the mineral binder composition, as a rheology improver in the mineral binder composition, and/or as a cement substitute in the mineral binder composition.
